# EUROPEAN PATENT APPLICATION

(11) **EP 3 243 973 A1**
(43) Date of publication of application: **15.11.2017**
(21) Application number: 17150801.3
(22) Date of filing: 10.01.2017
(51) Int. Cl.: E04C 5/12, B29C 45/14

(54) **ENCAPSULATED ANCHOR**

(30) Priority: 10.05.2016 US 201662334241 P; 06.01.2017 US 201715400679
(71) Applicant: Sorkin, Felix, L., Stafford, TX 77477 (US)
(72) Inventor: Sorkin, Felix, L., Stafford, TX 77477 (US)
(74) Representative: Bond, Christopher William

(57) **Abstract**

An encapsulated anchor includes an anchor core and an encapsulation. The encapsulation is molded onto the anchor core. The anchor core includes one or more detents which correspond with one or more keys of an encapsulating mold. The detents engage one or more of the keys such that the anchor core is aligned properly in the encapsulating mold.

## Description

### Cross-Reference to Related Applications

This application is a nonprovisional application that claims priority from U.S. provisional application number 62/334,241, filed May 10, 2016, and U.S. nonprovisional application number 15/400,679, each of which is hereby incorporated by reference in its entirety.

### Technical Field/Field of the Disclosure

The present disclosure relates generally to post-tension anchorage systems. More particularly, the present disclosure relates to anchors used in a post-tension anchorage system.

### Background of the Disclosure

Many structures are built using concrete, including, for instance, buildings, parking structures, apartments, condominiums, hotels, mixed-use structures, casinos, hospitals, medical buildings, government buildings, research/academic institutions, industrial buildings, malls, bridges, pavement, tanks, reservoirs, silos, foundations, sports courts, and other structures.

Prestressed concrete is structural concrete in which internal stresses are introduced to reduce potential tensile stresses in the concrete resulting from applied loads; prestressing may be accomplished by post-tensioned prestressing or pre-tensioned prestressing. In post-tensioned prestressing, a tension member is tensioned after the concrete has attained a specified strength by use of a post-tensioning tendon. The post-tensioning tendon may include for example and without limitation, anchorages, the tension member, and sheathes or ducts. Traditionally, a tension member is constructed of a suitable material exhibiting tensile strength which can be elongated including, for example, reinforcing steel, single or multi-strand cable. Typically, the tension member may be formed from a metal or composite material. The post-tensioning tendon generally includes an anchorage at each end. The cable is fixedly coupled to a fixed anchorage positioned at one end of the post-tensioning tendon, the so-called "fixed-end", and stressed at the other anchor, the "stressing-end" of the post-tensioning tendon.

The concrete may be poured into a concrete form. The concrete form may be a form or mold into which concrete is poured or otherwise introduced to give shape to the concrete as it sets or hardens thus forming the concrete member.

### Summary

The present disclosure provides for an encapsulated anchor. The encapsulated anchor may include an anchor core including one or more detents formed thereon. The encapsulated anchor may include an encapsulation, the encapsulating molded onto the anchor core.

The present disclosure also provides for a system for forming an encapsulated anchor for a post-tensioned concrete member. The system for forming an encapsulated anchor may include a first and second mold portion. The first and second mold portion each may have a mold portion surface corresponding to a portion of the outer surface of an encapsulated anchor wherein the first mold portion includes one or more keys. The system for forming an encapsulated anchor may include an anchor core which is to be encapsulated, the anchor core having a detent positioned to correspond and mate with one or more of the keys.

The present disclosure also provides for a method for forming an encapsulated anchor. The method may include providing an anchor core, the anchor core including one or more detents formed thereon. The method may include positioning the anchor core within an encapsulating mold. The encapsulating mold may include a first and second mold portion. The first and second mold portion each may have a mold portion surface corresponding to a portion of the outer surface of the encapsulated anchor wherein the first mold portion includes one or more keys corresponding with one or more of the detents of the anchor core. The method may include engaging one or more of the keys with one or more of the detents of the anchor core. The method may include closing the encapsulating mold. The method may include pouring polymer into the encapsulating mold about the anchor core. The method may include forming an encapsulated anchor.

### Brief Description of the Drawings

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 depicts an encapsulated anchor consistent with at least one embodiment of the present disclosure.
FIG. 2 depicts a perspective view of an anchor core consistent with at least one embodiment of the present disclosure.
FIG. 3 depicts an exploded view of an anchor encapsulating mold and anchor core consistent with at least one embodiment of the present disclosure.
FIG. 4 depicts a front view of the anchor core of FIG. 2.
FIG. 5 depicts a side view of the anchor core of FIG. 2.
FIG. 6 depicts a detail view of a detent of the anchor core of FIG. 2.

### Detailed Description

It is to be understood that the following disclosure provides many different embodiments, or examples, for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

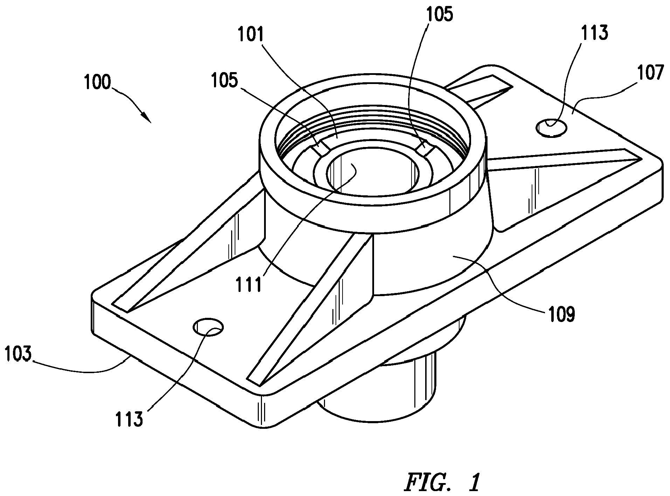

FIG. 1 depicts encapsulated anchor 100 consistent with at least one embodiment of the present disclosure. Encapsulated anchor 100 may include anchor core 101 and encapsulation 103, where encapsulation 103 is molded onto anchor core 101. "Molded onto" means formed around anchor core 101. Anchor core 101 may be formed from a metal such as iron, aluminum, or steel. Encapsulation 103 may be formed from a polymer such as epoxy, phenolic resin, nylon, polyethylene (including, but not limited to, high density polyethylene (HDPE)), polystyrene, or combinations thereof, or any other suitable material. Encapsulation 103 may protect anchor core 101 from exposure to the surrounding environment, including, for example and without limitation, protection from moisture or other corrosive forces.

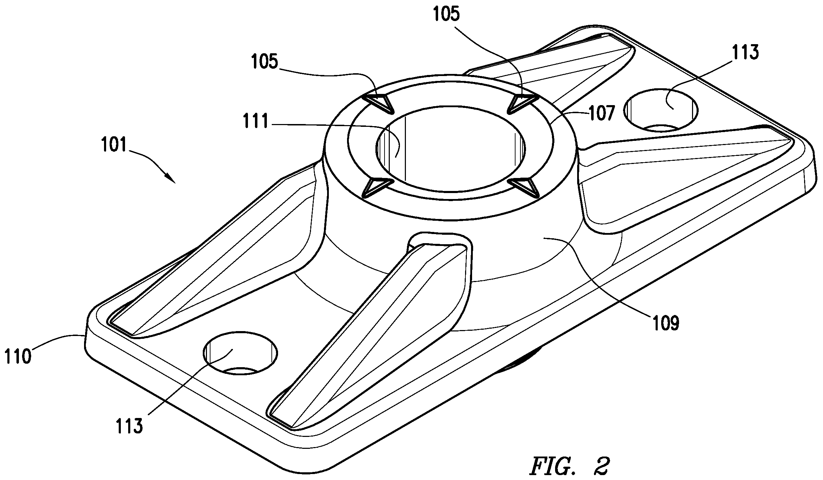

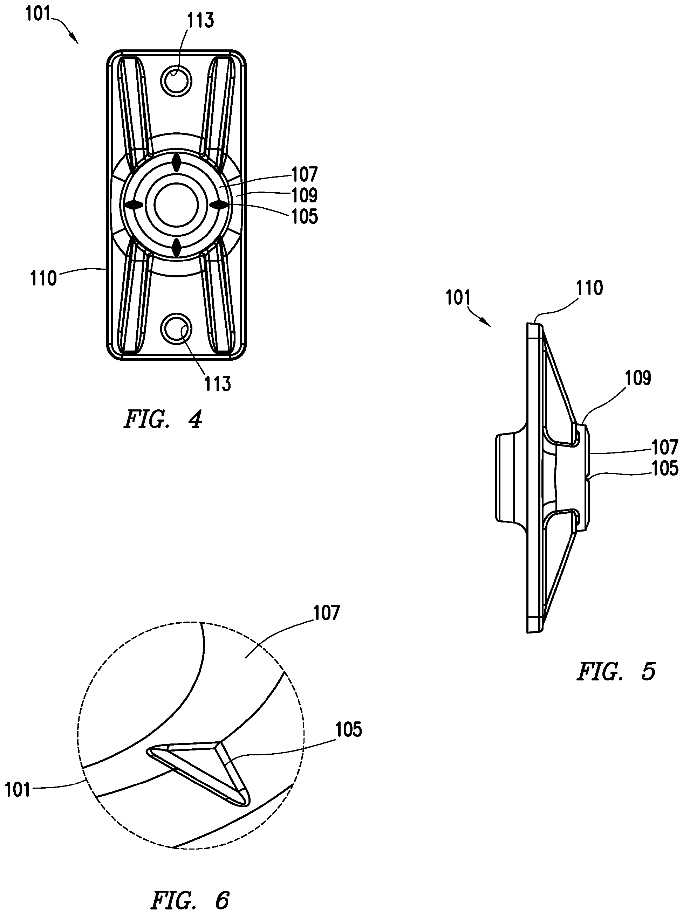

In some embodiments, as depicted in FIG. 2, anchor core 101 may include anchor plate 110. Anchor plate 110 may, in some embodiments, be a generally flat portion of anchor core 101. In some embodiments, anchor core 101 may include one or more detents 105. In some embodiments, detents 105 may be one or more grooves as depicted in FIGS. 4, 5, and 6. Although discussed as grooves, one having ordinary skill in the art with the benefit of this disclosure will understand that detents 105 may be any suitable structure without deviating from the scope of this disclosure including, for example and without limitation, one or more of grooves, holes, or any suitable protrusion, including, for example and without limitation, round, square, or rectangular protrusions. For example and without limitation, in some embodiments, detents 105 may be formed in upper surface 107 of wedge extension 109. Wedge extension 109 may be an annular projection extending from a face of anchor plate 110 of anchor core 101. Wedge extension 109 may have a frustoconical inner surface 111 for receiving one or more wedges when encapsulated anchor 100 is used in a post tensioned concrete member.

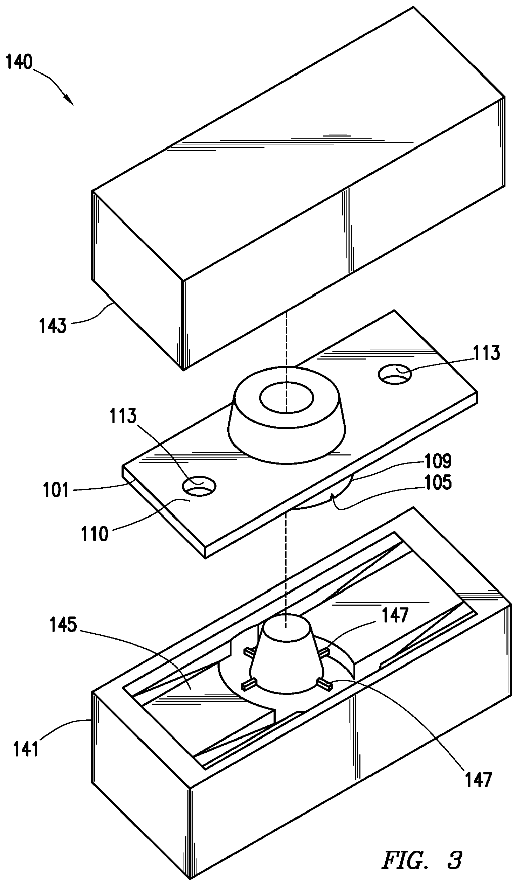

In some embodiments, as depicted in FIG. 3, encapsulating mold 140 may be utilized to mold encapsulation 103 onto anchor core 101. In some embodiments, encapsulating mold 140 may include two or more mold portions, depicted in FIG. 3 as first mold portion 141 and second mold portion 143. Encapsulating mold 140 may include mold portion surfaces 145. Mold portion surfaces 145 may be formed such that mold portion surfaces 145 conform to a portion of the final outer shape of encapsulated anchor 100 once encapsulation 103 is molded onto anchor core 101. In some embodiments, one or more of mold portions 141, 143 may be a mandrel.

In some embodiments, one or both of first mold portion 141 and second mold portion 143 may include one or more keys 147 positioned to correspond with one or more detents 105 of anchor core 101. Anchor core 101 may be inserted into encapsulating mold 140 such that one or more detents 105 align with one or more keys 147. Detents 105 and keys 147 may, for example and without limitation, retain anchor core 101 in proper orientation within encapsulating mold 140 as encapsulation 103 is placed into encapsulating mold 140 around anchor core 101. Retaining anchor core 101 in proper orientation may, for example and without limitation, reduce the possibility of misalignment between anchor core 101 and encapsulating mold 140 and therefore misalignment between anchor core 101 and encapsulation 103. In addition, detents 105 and keys 147 may, for example and without limitation, restrict anchor core 101 from rotating or otherwise moving within encapsulating mold 140 as encapsulation 103 is formed, such as when the polymer is poured or injected into encapsulating mold 140, thereby potentially misaligning anchor core 101 and encapsulation 103. In light of such restriction of rotation, in some embodiments, key 147 and detent 105 are referred to as an "indexing key" and an "indexing detent." Misalignment between anchor core 101 and encapsulation 103 may, result in problems during use of encapsulated anchor 100, including exposure of anchor core 101 to the surrounding environment, weakening of encapsulation 103, or misalignment between certain features of anchor core 101 and encapsulation 103 such as positioning of holes 113.

In some embodiments, keys 147 may correspond to and mate with the arrangement and shape of detents 105 when anchor core 101 is positioned within encapsulating mold 140. For example, where detents 105 are grooves, keys 147 may be corresponding bosses or ribs as depicted in FIG. 3. In other embodiments, keys 147 may be formed such that they correspond with any detent utilized including, for example and without limitation, one or more of grooves, holes, or any suitable protrusion, including, for example and without limitation, round, square, or rectangular protrusions.

To encapsulate anchor core 101, anchor core 101 may be positioned within encapsulating mold 140 such that one or more detents 105 engage with one or more keys 147 of encapsulating mold 140. Encapsulating mold 140 may be closed, such as, for example and without limitation, by moving first mold portion 141 and second mold portion 143 into contact about anchor core 101. Polymer may be poured into encapsulating mold 140 about anchor core 101 and allowed to harden. Encapsulating mold 140 maybe opened, releasing encapsulated anchor 100 therefrom.

Although described herein such that detents 105 are formed in anchor core 101 and keys 147 are formed in encapsulating mold 140, detents 105 may be formed on encapsulating mold 140 and keys 147 formed on anchor core 101 without deviating from the scope of this disclosure.

The foregoing outlines features of several embodiments so that a person of ordinary skill in the art may better understand the aspects of the present disclosure. Such features may be replaced by any one of numerous equivalent alternatives, only some of which are disclosed herein. One of ordinary skill in the art should appreciate that they may readily use the present disclosure as a basis for designing or modifying other processes and structures for carrying out the same purposes and/or achieving the same advantages of the embodiments introduced herein. One of ordinary skill in the art should also realize that such equivalent constructions do not depart from the spirit and scope of the present disclosure and that they may make various changes, substitutions, and alterations herein without departing from the spirit and scope of the present disclosure.

## Claims

1. An encapsulated anchor comprising:
an anchor core, the anchor core including one or more detents formed thereon; and
an encapsulation, the encapsulation molded onto the anchor core.

2. The encapsulated anchor of claim 1, wherein the anchor core further comprises an anchor plate, the anchor plate being a generally flat portion of the anchor core, and a wedge extension projecting from a face of the anchor plate, the wedge extension having an upper surface, wherein the detents are formed in or on the upper surface.

3. The encapsulated anchor of claim 2, wherein the wedge extension has a frustoconical inner surface.

4. The encapsulated anchor of any one of claims 1 to 3, wherein the detents comprise one or more of grooves, holes, or protrusions.

5. The encapsulated anchor of any one of claims 1 to 4, wherein the encapsulation is formed from one of epoxy, phenolic resin, nylon, polyethylene, polystyrene, or combinations thereof.

6. The encapsulated anchor of any one of claims 1 to 5, wherein the encapsulation is formed of HDPE.

7. A system for forming an encapsulated anchor for a post-tensioned concrete member comprising:
a first and second mold portion, the first and second mold portion each having a mold portion surface corresponding to a portion of the outer surface of an encapsulated anchor wherein the first mold portion includes one or more keys; and
an anchor core having one or more detents, the detent positioned to correspond with one or more of the keys.

8. The system for forming an encapsulated anchor of claim 7, wherein one or more of the keys is formed as a boss or rib.

9. The system for forming an encapsulated anchor of claim 8, wherein the detent is one or more of a groove, hole, or protrusion.

10. The system for forming an encapsulated anchor of any one of claims 7 to 9, further comprising an encapsulation positioned between the anchor core and the first and second mold portion.

11. The system for forming an encapsulated anchor of any one of claims 7 to 10, wherein the first mold portion comprises a mandrel.

12. A method for forming an encapsulated anchor comprising:
providing an anchor core, the anchor core including one or more detents formed thereon;
positioning the anchor core within an encapsulating mold, the encapsulating mold including:
a first and second mold portion, the first and second mold portion each having a mold portion surface corresponding to a portion of the outer surface of the encapsulated anchor wherein the first mold portion includes one or more keys corresponding with one or more of the detents of the anchor core;
engaging one or more of the keys with one or more of the detents of the anchor core;
pouring polymer into the encapsulating mold about the anchor core; and
forming an encapsulated anchor.

13. The method of claim 12, wherein the polymer is epoxy, phenolic resin, nylon, polyethylene, polystyrene, or combinations thereof.

14. The process of claim 12 or claim 13 further comprising after pouring polymer:
hardening the polymer to form an encapsulation.

15. The process of claim 14 further comprising after hardening the polymer:
opening the mold; and
releasing the encapsulated anchor from the mold.
